(19) **Europäisches Patentamt European Patent Office Office européen des brevets**

(11) **EP 4 571 376 A1**

(12) **EUROPEAN PATENT APPLICATION**

(43) Date of publication:
**18.06.2025 Bulletin 2025/25**

(21) Application number: **24214913.6**

(22) Date of filing: **22.11.2024**

(51) International Patent Classification (IPC):
*G02B 6/02* (2006.01)

(52) Cooperative Patent Classification (CPC):
**G02B 6/02042;** G02B 6/03633; G02B 6/2552

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.11.2023 US 202363603673 P**

(71) Applicant: **Corning Research & Development Corporation Corning, New York 14831 (US)**

(72) Inventors:
• **BUTLER, Douglas Llewellyn New York, 14870 (US)**
• **GOSAI, Agnivo New York, 14870 (US)**
• **LI, Ming-Jun New York, 14845 (US)**
• **MILLER, William James New York, 14845 (US)**

(74) Representative: **Reddie & Grose LLP The White Chapel Building 10 Whitechapel High Street London E1 8QS (GB)**

(54) **MULTICORE OPTICAL FIBER FAN-IN/FAN-OUT DEVICE**

(57) A fan-in/fan-out device and method for fabrication thereof. The device includes a tapered assembly having a narrow end with an end face and a wide end from which a plurality of composite core optical fibers extend. Each composite core optical fiber includes a cladding and a composite core having first and second cores. The cladding and cores all have different indexes of refraction. The tapered assembly end face includes a fused cladding region comprising the claddings of the composite core optical fibers and the composite cores thereof. The composite cores are arranged in the fused cladding region to define a core pattern that matches the core pattern of a multicore optical fiber. The tapered assembly is fabricated by inserting the composite core optical fibers into a silica tube, heating the tube and fiber assembly to a softening temperature, and pulling apart the ends thereof.

**FIG. 1**

EP 4 571 376 A1

## Description

### Priority Application

This application claims the benefit of priority of U.S. Provisional Application No. 63/603,673, filed on November 29, 2023, the content of which is relied upon and incorporated herein by reference in its entirety.

### Technical Field

This disclosure relates generally to optical connectivity, and more particularly to fan-in/fan-out devices and methods of fabricating fan-in/fan-out devices.

### Background

Optical fibers are useful in a wide variety of applications, the most common being as part of the physical layer of a communication protocol through which network nodes communicate over a data network. Benefits of optical fibers include wide bandwidth and low noise operation. Continued growth of the Internet has resulted in a corresponding increase in demand for network capacity. This demand for network capacity has, in turn, generated a need for increased bandwidth between network nodes.

Multicore optical fibers are optical fibers in which multiple cores are contained within a common cladding. Multicore optical fibers function essentially as a bundle of single-core fibers, thereby providing increased capacity as compared to individual single-core optical fibers. Multicore optical fiber has been studied as one way to improve the transmission capacity of optical fibers in submarine cable and other long haul applications. Multicore optical fibers also have a role in short distance communications, where the recent explosive growth of hyperscale data centers, edge computing, and 5G/6G access networks has been driving demand for new fiber installations with increasingly high fiber counts and cable densities.

One component often found in a multicore optical fiber based link is known as a fan-in/fan-out (FIFO) device. Fan-in/fan-out devices individually couple each optical core of a multicore optical fiber to a separate single-core optical fiber. The devices operate by routing the tightly pitched optical cores from the multicore optical fiber into a wider pitch for coupling to standard single-core optical fibers, e.g., 125 $\mu$m diameter glass cladding optical fibers.

Present fan-in/fan-out have several disadvantages, including high insertion loss as well as complex and expensive manufacturing requirements. Consequently, there exists a need for fan-in/fan-out devices having low insertion loss that can be fabricated using high volume automated production.

### Summary

In one aspect of the disclosure, an improved fan-in/fan-out device for a multicore optical fiber is disclosed. The device includes a tapered assembly and a plurality of composite core optical fibers. The tapered assembly has a wide end and a narrow end with a tapered assembly end face. Each of the composite core optical fibers extends from the wide end of the tapered assembly and includes a composite core and a first cladding. The composite core has a first core with a first radius and first index of refraction and a second core surrounding the first core with a second radius and a second index of refraction different from the first index of refraction. The first cladding surrounds the composite core and has a third radius and a third index of refraction different from both the first index of refraction and the second index of refraction. The tapered assembly end face includes a fused cladding region comprising the first cladding of each of the composite core optical fibers and a plurality of composite cores embedded in the fused cladding region. The plurality of composite cores comprises the composite core of each of the composite core optical fibers and defines a first core pattern in the tapered assembly end face that matches a second core pattern of the multicore optical fiber.

In one embodiment of the disclosed device, the first index of refraction may be greater than the second index of refraction, and the second index of refraction may be greater than the third index of refraction. In a further embodiment, the tapered assembly may further include an outer region that surrounds the fused cladding region with a fourth index of refraction equal to or greater than the third index of refraction. In one embodiment, the first cladding may be an inner cladding, and each of the composite core optical fibers may further include a second cladding surrounding the first cladding and having a fifth index of refraction higher than the third index of refraction. In one embodiment of the disclosed device, each of the composite core optical fibers may include only one composite core.

In one embodiment of the disclosed device, the device may further include a plurality of matching optical fibers each operatively coupled to a respective one of the composite core optical fibers. Each matching optical fiber may have a third core with a fourth radius, and a third cladding surrounding the third core. The fourth radius may be selected so that the matching optical fiber has a mode field diameter matching the mode field diameter of the composite core optical fiber. In some embodiments, the third core may have the first index of refraction or another index of refraction that is different than the second index of refraction. The third cladding has an index of refraction that is different than that of the third core, and in some embodiments may have the second index of refraction.

In one embodiment of the disclosed device, the tapered assembly may include a neckdown region having a taper ratio. In this embodiment, each of the composite core optical fibers may have an optical fiber end face, wherein the first core of the composite core optical fiber may have the first radius at the optical fiber end face and a fifth radius at the tapered assembly end face. The ratio of the first radius to the fifth radius may be defined by the taper ratio of the neckdown region, and the taper ratio may be between 2 and 4.

In one embodiment of the disclosed device, the tapered assembly may include the neckdown region having the taper ratio. The second core pattern may have a predetermined spacing, and the device may further include the multicore optical fiber operatively coupled to the tapered assembly end face. In this embodiment, the taper ratio may be equal to the ratio of the outer diameter of the composite core optical fibers and the predetermined spacing reduced by a coalescence factor.

In another aspect of the disclosure, an improved method of fabricating the fan-in/fan-out device for a multicore optical fiber is disclosed. The method includes inserting the plurality of composite core optical fibers into a silica tube to define a pre-taper assembly having a first end and a second end. Each of the composite core optical fibers includes the first core with the first radius and the first index of refraction, the second core surrounding the first core with the second radius and the second index of refraction different from the first index of refraction, and the first cladding surrounding the second core with the third radius and the third index of refraction different from the first index of refraction and the second index of refraction. The method further includes heating a portion of the pre-taper assembly, collapsing the silica tube onto the composite core optical fibers, pulling the first end and the second end of the pre-taper assembly in opposite directions to form the tapered assembly with the neckdown region, and cleaving the neckdown region of the tapered assembly to form the tapered assembly end face.

In one embodiment of the disclosed method, the silica tube may have a first softening temperature, the composite core optical fibers may have a second softening temperature higher than the first softening temperature, and the method may further include applying a vacuum to the silica tube and heating the portion of the pre-taper assembly to the first softening temperature to collapse the silica tube onto the composite core optical fibers.

In one embodiment of the disclosed method, the method may further include heating the portion of the pre-taper assembly to the second softening temperature, and the first end and the second end of the pre-taper assembly may be pulled in opposite directions to form the neckdown region of the tapered assembly in response to the portion of the pre-taper assembly reaching the second softening temperature.

In one embodiment of the disclosed method, the first index of refraction may be greater than the second index of refraction, and the second index of refraction may be greater than the third index of refraction. In one embodiment, the silica tube may have the fourth index of refraction equal to or greater than the third index of refraction. In one embodiment, the first cladding may be the inner cladding, and each of the composite core optical fibers may further include the second cladding surrounding the first cladding and having the fifth index of refraction higher than the third index of refraction.

In one embodiment of the disclosed method, the first core and the second core of each of the composite core optical fibers may define the composite core, and each of the composite core optical fibers may include only one composite core. In one embodiment, there may be four composite core optical fibers each having the first diameter, and the silica tube may have the inner diameter of between 2.424 and 2.576 times the first diameter.

In one embodiment of the disclosed method, the method may further include, for each of the composite core optical fibers, splicing a matching optical fiber to the composite core optical fiber. Additionally, the matching optical fiber may include the third core having the first index of refraction and the third cladding having the second index of refraction, and the third core may have the fourth radius such that the mode field diameter of the matching optical fiber matches the mode field diameter of the composite core optical fiber.

In one embodiment of the disclosed method, each of the composite core optical fibers may have the outer diameter equal to twice the third radius, and the method may further include splicing the multicore optical fiber having the plurality of cores with the predetermined spacing to the tapered assembly end face. In this embodiment of the method, the first end and the second end of the pre-taper assembly may be pulled in opposite directions such that the neckdown region of the tapered assembly has the taper ratio equal to the ratio of the outer diameter of the composite core optical fibers and the predetermined spacing reduced by the coalescence factor. In one embodiment, the taper ratio may be between 2 and 4, and the coalescence factor may be between 5 and 8 percent.

In one embodiment of the disclosed method, the method may further include aligning the tapered assembly end face with the multicore optical fiber, measuring a return loss while causing relative rotation between the tapered assembly end face and the multicore optical fiber to determine an orientation that produces a loss measurement below a predetermined value, and splicing the tapered assembly end face and the multicore optical fiber at the orientation.

Another aspect of this disclosure is a composite core optical fiber itself. The optical fiber includes a composite core having a first core with a first radius $r_1$ and a first refractive index delta $\Delta_1$ and a second core surrounding the first core and extending to a second radius $r_2$. The second core has a second refractive index delta $\Delta_2$. The optical fiber also includes a first cladding surrounding the composite core and extending to a third radius $r_3$, with the first cladding having a third refractive index delta $\Delta_3$, and a second cladding surrounding the first cladding and having a refractive index delta $\Delta_4$. The optical fiber is characterized by $\Delta_1 > \Delta_2 > \Delta_3$, and by $\Delta_4 > \Delta_3$.

**Brief Description of the Drawings**

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a perspective view of an exemplary fan-in/fan-out device including a plurality of composite core optical fibers and a tapered assembly having a tapered assembly end face for operatively coupling a multicore optical fiber to a plurality of single core optical fibers.

Fig. 2A is front view of the end face of one of the composite core optical fibers of Fig. 1.

Fig. 2B is a front view of the end face of one of the single core optical fibers of Fig. 1.

Fig. 3A is a front view of the end face at the narrow end of the tapered assembly of Fig. 1.

Fig. 3B is a front view of the end face of the multicore optical fiber of Fig. 1.

Fig. 4 is a graphical view of refractive index verses radial distance from the center of an exemplary composite core optical fiber of Fig. 1 prior to tapering.

Fig. 5 is a graphical view of refractive index verses radial distance from the center of the exemplary composite core optical fiber of Fig. 4 after tapering.

Figs. 6 and 7 are lengthwise and axial cross-sectional views (respectfully) of an exemplary pre-taper assembly including a silica tube and a plurality of composite core optical fibers.

Figs. 8 and 9 are axial cross-sectional views of an exemplary tapered assembly that may be produced by tapering the pre-tapered assembly of Figs. 6 and 7.

Fig. 10 is a diagrammatic view of one of the composite core optical fibers with a portion of coating stripped and a rounded tip formed by heating.

Figs. 11-13 are schematic views of exemplary taper stations each including a heater that may be used to taper the pre-taper assembly of Figs. 6 and 7.

Figs. 14-18 are schematic views of various types of burner that may be used for the heater of Figs. 11-13.

Figs. 19 and 20 are cross-sectional views of the pre-taper assembly before and after tapering depicting a well-controlled collapse and a poorly controlled collapse (respectively) of the silica tube of Figs. 6 and 7.

Fig. 21 is a schematic view of an exemplary tapered assembly that may be fabricated using one of the taper stations of Figs. 11-13.

Fig. 22 is a schematic view of the tapered assembly of Fig. 21 after cleaving and splicing to a multicore optical fiber.

Fig. 23 is a schematic view of a loss measurement system that may be used to measure the quality of the tapered assembly of Fig. 22 prior to splicing with the multicore optical fiber.

Fig. 24 is a schematic view of a splicing system that may be used to optimize alignment between the multicore optical fiber and the tapered assembly of Fig. 22 prior to splicing.

Figs. 25 and 26 are cross-sectional views of a matching optical fiber that may be used to operatively couple the composite core optical fibers to the single core optical fibers of Fig. 1.

Figs. 27 and 28 are graphical views showing measured signal loss in dB versus wavelength in nanometers for experiments involving a composite core optical fiber operatively coupled to a single-core optical fiber with and without the matching optical fibers of Figs. 25 and 26.

Figs. 29-36 are graphical views of mode field diameter verses core radius for composite core optical fibers having different composite core designs.

Figs 37 and 38 are graphical views of refractive index versus radial distance from the center of a composite core optical fiber including an outer cladding before tapering and after tapering, respectively.

Fig. 39 is a cross-sectional view of the composite core optical fiber of Fig. 38.

## Detailed Description

Various embodiments will be further clarified by examples in the description below. The fan-in/fan-out devices disclosed herein are fabricated from a plurality of composite core single mode optical fibers that have been inserted into a silica tube. Each of the composite core optical fibers includes at least three regions (e.g., multiple core regions and one or more cladding regions) each formed from a material having a different index of refraction than any adjacent region. This assembly of optical fibers is tapered and cleaved to produce an optical interface suitable for splicing to a multicore optical fiber. The tapered assembly may be used to fabricate a fan-in/fan-out device having lower cost and insertion loss than known devices and can be fabricated using an automated process that enables high volume production.

The automated process steps for fabricating the tapered assembly may include one or more of the following steps: removing protective coatings from the composite core optical fibers, inserting the bare portion of each composite core optical fiber into a silica tube, heating a mid-region of the silica tube, pulling the optical fiber/silica tube assembly to form a neckdown region of the tapered assembly, applying a suitable adhesive (e.g., epoxy) to seal the wide end of the tapered assembly, cleaving the neckdown region to define an end face, splicing the optical interface provided by the end face to a multicore optical fiber, packaging the fan-in/fan-out device, and characterizing the fan-in/fan-out device.

A low-cost device may thereby be fabricated that is highly reliable and available in high volumes. Using a low taper ratio (e.g., on the order of 3:1) enables the use of a single mode optical fiber having a modified index profile in the pre-taper assembly. The use of a low taper ratio facilitates tight control of fiber core spacing on the narrow end of the taper while still having integrated single core optical fibers on the fanout side. The resulting mode fields of the optical fibers are sufficiently matched at each end of the device to the mode fields of the multicore optical fiber so that devices with manageable levels of overlap generate low signal losses.

In describing various embodiments in further detail below, example properties/characteristics for the different regions of composite core optical fibers are disclosed. For example, the cross-sectional size for each of the different regions is expressed by referring to a radius of the region in question. The radius is measured from a geometric center of the region in question. The examples illustrated and described assume that at least the different core regions of the composite core optical fibers are concentric such that they have the same geometric center. This represents an ideal construction, so the radius values expressed can be considered to be nominal (i.e., intended) values. In practice, however, there may be slight concentricity differences between the different regions. The relative sizes and ratios mentioned in this disclosure may still apply to such embodiments. In other words, this disclosure is not limited to fan-in/fan-out devices made with perfectly concentric composite core optical fibers.

Another property/characteristic referred to herein is the "index of refraction" or "refractive index". Such references refer to the index of refraction at a wavelength of 1550 nanometers (nm) unless otherwise specified.

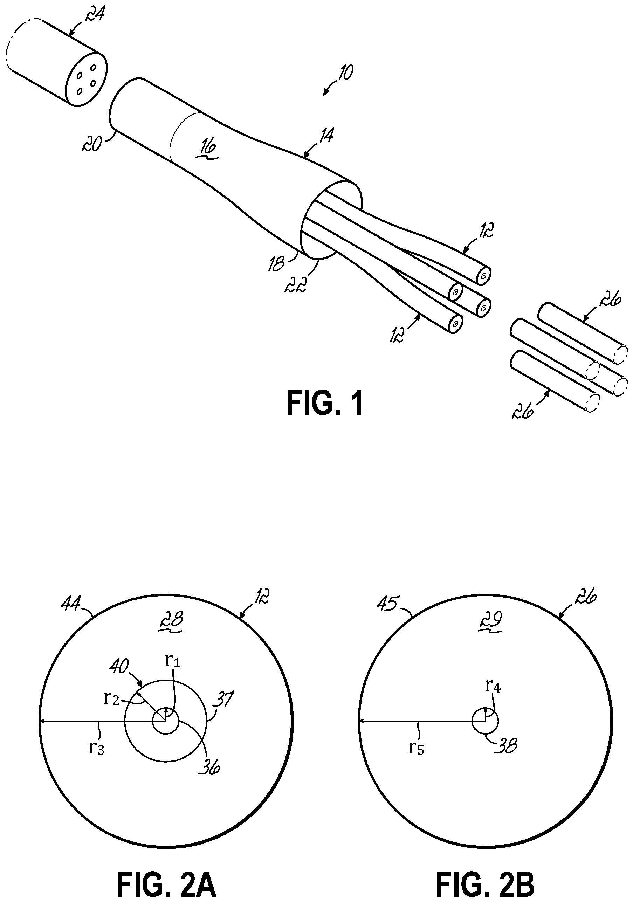

Fig. 1 depicts an exemplary fan-in/fan-out device 10 including a plurality of composite core optical fibers 12 that project outward from a tapered assembly 14. The tapered assembly 14 includes an outer surface 16, a wide end 18, and a narrow end 20. The wide end 18 of tapered assembly 14 may include a collar 22 from which the composite core optical fibers 12 extend. Gaps between the composite core optical fibers 12 and the collar 22 of tapered assembly 14 may be filled with an adhesive, such as an ultra-violet (UV) cured adhesive (not shown). The narrow end 20 of tapered assembly 14 may be operatively coupled (e.g., by fusion splicing) to a multicore optical fiber 24, and each composite core optical fiber 12 may be operatively coupled (e.g., also by fusion splicing) to a respective single core optical fiber 26. The fan-in/fan-out device 10 may thereby operatively couple each core of the multicore optical fiber 24 to the core of a respective single core optical fiber 26.

Figs. 2A and 2B depict an end face 28 of an exemplary composite core optical fiber 12 (Fig. 2A), and an end face 29 of an exemplary single core optical fiber 26 (Fig. 2B) to which the composite core optical fiber 12 may be spliced. The composite core optical fiber 12 includes an inner core region, or "inner core" 36, having a radius $r_1$ and an index of refraction $n_1$, an outer core region, or "outer core" 37, having a radius $r_2$ and an index of refraction $n_2$, and a cladding region, or "cladding" 44, having a radius $r_3$ and an index of refraction $n_3$. The single core optical fiber 26 has a core region, or "core" 38, having a radius $r_4$ and an index of refraction $n_4$ and a cladding 45 having a radius $r_5$ and an index of refraction $n_5$. The inner and outer cores 36, 37 of composite core optical fiber 12 may be referred to collectively as a composite core 40. As described in more detail below, the region of composite core optical fiber 12 referred to as the outer core 37 may function as one or more of a cladding or a core at various points in the tapered assembly 14 depending on the diameter of the composite core optical fiber 12 at the point in question.

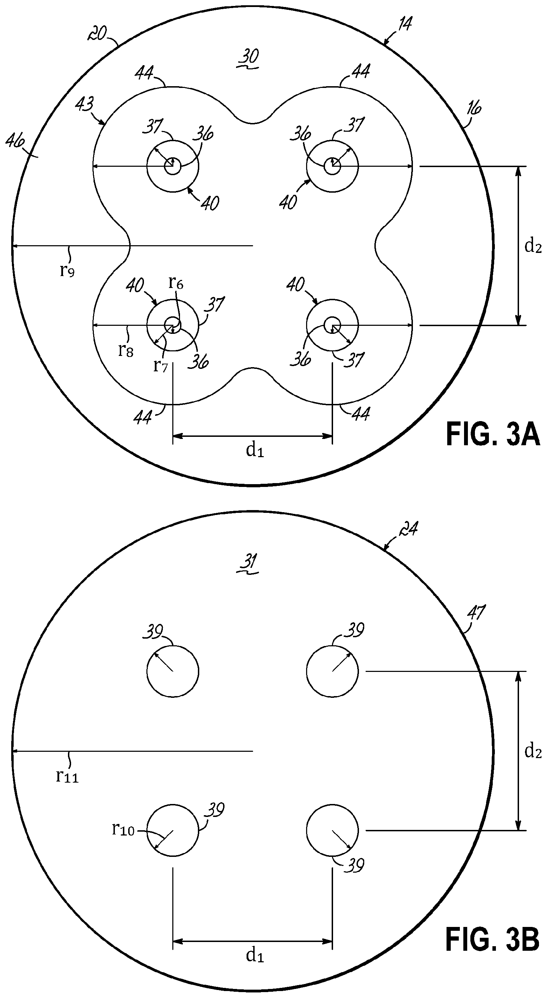

Figs. 3A and 3B depict an end face 30 of tapered assembly 14 (Fig. 3A) and an end face 31 of multicore optical fiber 24 (Fig. 3B). The tapered assembly end face 30 includes the composite cores 40 (e.g., four composite cores 40) of the plurality of composite core optical fibers 12. Each composite core 40 of tapered assembly end face 30 has a radius $r_7$ defined by the radius of the outer core 37 of the composite core optical fiber 12 after tapering. At the tapered assembly end face 30, the inner core 36 has a radius $r_6$, and the cladding 44 has a radius $r_8$. The claddings 44 of the individual composite core optical fibers 12 have coalesced together to from a fused cladding region 43, and each composite core 40 is embedded in the fused cladding region 43. The fused cladding region 43 is surrounded by an outer region 46 having a radius $r_9$ and index of refraction $n_6$. The multicore optical fiber 24 includes a plurality of cores 39 (e.g., four cores) each having a radius $r_{10}$, and a cladding 47 having a radius $r_{11}$.

The cores 39 of multicore optical fiber 24 may be arranged so that the multicore optical fiber end face 31 has a core pattern with a predetermined placement, e.g., a radially symmetric 2×2 arrangement with a predetermined spacing (e.g., vertical and horizontal spacings $d_1$, $d_2$) between adjacent cores 39. To optimize the coupling of optical signals between fan-in/fan-out device 10 and multicore optical fiber 24, each composite core 40 of tapered assembly end face 30 should be aligned with a respective one of the cores 39 of multicore optical fiber 24. Accordingly, the composite cores 40 of tapered assembly 14 may be arranged to define a core pattern in the tapered assembly end face 30 that matches the core pattern of the multicore optical fiber end face 31, e.g., a 2×2 arrangement having similar spacings $d_1$, $d_2$ as the multicore optical fiber end face 31. The core patterns of a pair of optical interfaces may be considered as matching if, when the end faces thereof are optimally aligned and oriented, the signal loss across the optical interfaces based on modeling is less than 0.50 dB at an operating wavelength of 1310 nm, preferably less than 0.15 dB, and more preferably less than 0.05 dB.

The radius $r_7$ of each outer core 37 at the tapered assembly end face 30 is less than the radius $r_2$ of each outer core 37 at the composite core optical fiber end face 28 as a result of a tapering process. The reduction in radius is provided by:

$$r_7 = \frac{r_2}{R_{taper}} \quad Eqn.\,1$$

where $R_{taper}$ is the taper ratio of tapered assembly 14. The radius $r_6$ of inner core 36 and radius $r_8$ of the cladding 44 of each composite core optical fiber 12 are likewise reduced by the taper ratio $R_{taper}$ at the tapered assembly end face 30 as shown by:

$$r_6 = \frac{r_1}{R_{taper}} \quad Eqn.\,2$$

$$r_8 = \frac{r_3}{R_{taper}} \quad Eqn.\,3$$

The refractive properties of the different regions of an optical fiber may be described using what is known as a relative refractive index change or refractive index delta, which is provided by:

$$\Delta_a = \frac{n_a^2 - n_0^2}{2n_a^2} \quad Eqn.\,4$$

where $n_\alpha$ is the index of refraction in the region, and where $n_0$ is a reference index of refraction. The reference index of refraction is typically selected to be $n_0 = 1.444$ at 1550 nm wavelength, which is the index of refraction of undoped silica at 1550 nm wavelength, although other reference values may be used. The index of refraction at other wavelengths may be obtained by using the Sellmeier equation as known in the art. The refractive index delta is often expressed as a percentage.

The core and cladding of an optical fiber may be made of fused silica that is doped to have different indexes of refraction. These differences in refractive index define an optical waveguide that generally confines optical signals propagating through the optical fiber to a region of the optical fiber in and around the core. Optical fibers have a mode field diameter that depends on the both the dimensions of these various regions and their refractive indexes. The mode field diameter characterizes the width of an optical signal across the end face of a single-mode fiber, and thus provides an indication of how tightly the optical signal is confined by the optical waveguide.

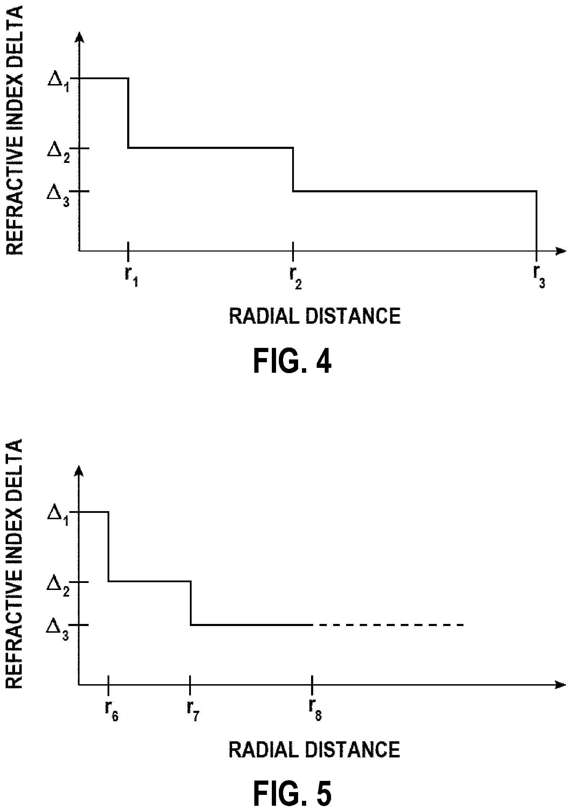

Fig. 4 illustrates an exemplary refractive index delta profile for an exemplary composite core optical fiber 12 of the fan-in/fan-out device 10 prior to tapering. The index profile includes an inner core refractive index delta of $\Delta_1$ out to radius $r_1$, an outer core refractive index delta $\Delta_2$ from radius $r_1$ to radius $r_2$, and a cladding refractive index delta $\Delta_3$ from radius $r_2$ out to radius $r_3$. Beyond radius $r_3$, the refractive index delta is shown as negative owing to the refractive index of air $n_{air}$ being less than the reference refractive index $n_0$. The refractive index deltas of the depicted index profile have been selected so that $\Delta_1 > \Delta_2 > \Delta_3$. At the wide end of the composite core optical fiber 12, optical signals are largely confined by a waveguide defined by the interaction of the inner core 36 and outer core 37. As the radiuses of these cores shrink, the waveguide properties of the composite core optical fiber 12 may become dominated by the interaction of the inner core 36, outer core 37, and cladding 44. Advantageously, a three-index composite core optical fiber 12 can therefore tolerate a larger taper ratio than a two-index non-composite core optical fiber without the core region losing its ability to define an optical waveguide. Thus, the additional index enables a three-index composite core optical fiber 12 to provide a single-mode waveguide across a wider range of optical fiber diameters than is generally possible with an optical fiber having regions limited to only two indexes of refraction.

Fig. 5 illustrates the index profile of each composite core optical fiber 12 at the narrow end 20 of tapered assembly 14, i.e., after tapering. As can be seen from the graphs, the tapering process has reduced the radius of the cladding 44 from $r_3$ to $r_8$. The tapering process has likewise reduced the radiuses of the inner core 36 and outer core 37 from $r_1$ to $r_6$ and $r_2$ to $r_7$, respectively. However, the refractive index deltas $\Delta_1$, $\Delta_2$, $\Delta_3$ of the inner core 36, outer core 37, and cladding 44 remain unchanged. The ratios $r_1/r_6$, $r_2/r_7$, $r_3/r_8$ are generally equal to each other and the taper ratio $R_{taper}$, i.e.,

$$\frac{r_1}{r_6} = \frac{r_2}{r_7} = \frac{r_3}{r_8} = R_{taper} \quad Eqn.\,5$$

The refractive index delta profiles of Figs. 4 and 5 are depicted as ideal profiles with perfect step changes between regions of the composite core optical fiber 12. However, it should be understood that dopant diffusions which often occur during the manufacturing processes may produce profile transitions which are more gradual than the depicted step changes. It should be further understood these profile transitions can be made sufficiently abrupt to avoid adversely affecting the functionality of the optical fiber. Also, index profiles may be purposely designed with graded refractive indexes (such as an alpha profile as known in the art) to fabricate an optical fiber having a similar functionally as would be provided by a step gradient.

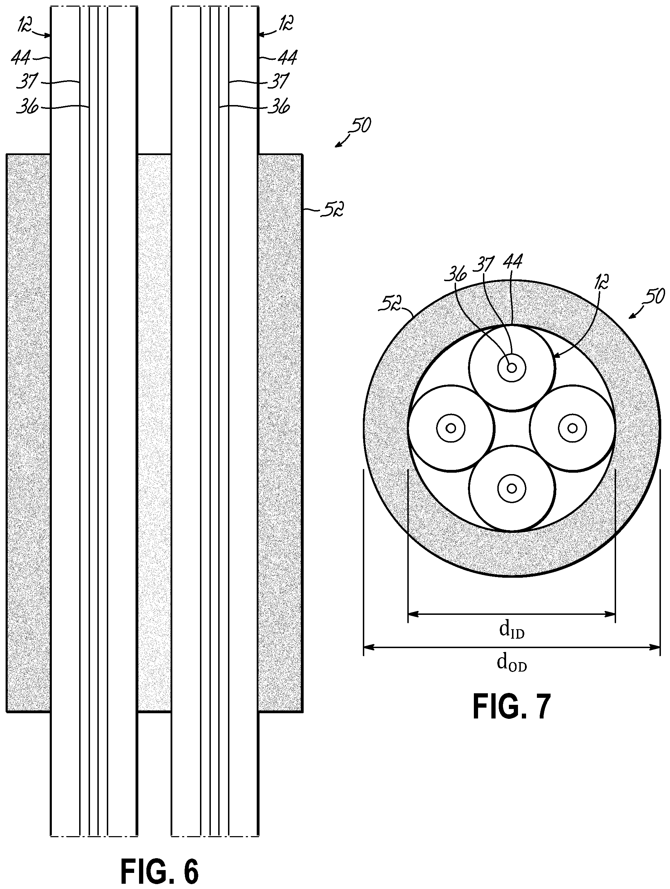

Figs. 6 and 7 provide cross-sectional side and end views (respectively) of an exemplary pre-taper assembly 50. The pre-taper assembly includes a silica tube 52 having a refractive index $n_6$ and a plurality of composite core optical fibers 12, e.g., four composite core optical fibers 12 in a 2×2 arrangement. The composite core optical fibers 12 may be placed within the silica tube 52 by inserting them through one of the open ends thereof. To aid insertion, the end of the silica tube 52 into which the composite core optical fibers 12 are inserted may be flared or otherwise provided with a funnel shape (not shown). The flared end may also form the collar 22 (Fig. 1), which may facilitate application of an adhesive to the wide end 18 of tapered assembly 14 after tapering.

As best shown by Fig. 7, silica tube 52 may have an inside diameter $d_{ID}$ and an outside diameter $d_{OD}$. The inside diameter $d_{ID}$ of silica tube 52 may be selected to control the geometry of the composite core optical fibers 12 and ensure proper symmetry and positioning thereof. In the case of the depicted 2×2 arrangement, the four composite core optical fibers 12 may be placed such that they form a square configuration where the inner cores 36 are predictably and equidistantly spaced within the silica tube 52. In an exemplary embodiment, the silica tube 52 may have an outside diameter of about 375 to 1000 $\mu$m and may be stuffed with a plurality of composite core optical fibers 12 each having an outside diameter of 125 $\mu$m. The inner surface of silica tube 52 may have a round cross-section (as shown), or it may have a polygonal shaped cross-section (e.g., a diamond or square shape) depending on the desired arrangement of the composite core optical fibers 12.

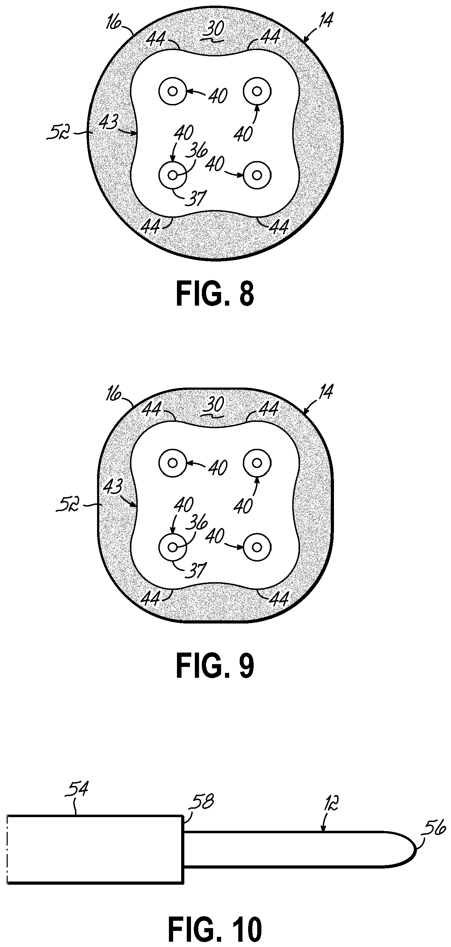

Referring now to Fig. 8, silica tubes 52 made of pure fused silica typically result in the narrow end 20 of tapered assembly 14 having an outer surface 16 with a round cross-sectional Shape. In contrast, as depicted by Fig. 9, based on the outer diameter of the untapered tube 52, the narrow end 20 of tapered assembly 14 may have an outer surface 16 with a squared cross-sectional shape. For. e.g. when tube 52 is tapered down to an outside diameter of 125 $\mu$m from an initial diameter of 400 $\mu$m, it may result into the squared cross sectional shape shown in Fig. 9. Whereas, when tube 52 is tapered down to an outside diameter of 260 $\mu$m from an initial diameter of 750 $\mu$m, it could retain the circular cross sectional shape shown in Fig. 8. The resulting tapered assembly 14 having more of a round outer surface 16, is generally preferred to one having a squared shape due to round outer surfaces being more conducive to high quality cleaving than squared outer surfaces. Making the silica tube 52 softer by adding some dopants can further help in retaining the round surface. Adding a suitable amount of boron oxide (e.g., 2-8% $B_2O_3$ by weight) to a silica tube 52 may further lower the softening temperature of the silica so that the during the tapering process, there may be less distortion of the composite core optical fibers 12. The softer material of the tube 52 can also allow the tube 52 to deform more easily around the composite core optical fibers 12 and fill in interstitial voids. Whereas, adding only Fluorine (1-2 % by weight) may instead make the tube harder compared to silica which could deform the composite core optical fibers 12 to a greater extent.

Accordingly, to improve the fabrication process and/or performance of the fan-in/fan-out device 10, the silica tube 52 may be doped with one or more dopant materials. The example mentioned above involves boron oxide and fluorine as doping materials. These doping materials may lower the index of refraction $n_6$ of the silica tube 52 relative to pure silica, thus giving it a negative refractive index delta $\Delta_6$. A suitable percentage by weight of one or more doping materials like fluorine and/or boron oxide may be used to lower the refractive index $n_6$ of the silica tube 52 below the refractive index $n_3$ of the cladding 44 of composite core optical fibers 12. Other suitable doping materials include Aluminum Phosphate ($AlPO_4$, 2-6 % by weight).

The silica tube 52 may set the outer diameter ($d_{OD} = 2 \times r_9$) of the narrow end 20 of tapered assembly 14 to provide a repeatable diameter for reliable splicing to the multicore optical fiber 24. The silica tube 52 may also add structure to the tapered assembly 14, thereby increasing the reliability and robustness thereof. The silica tube 52 may also protect the tapered junctions, which are the points where the composite core optical fibers 12 meet and separate. The silica tube 52 may thereby provide strain relief for handling, further processing, and final packaging of the fan-in/fan-out device 10.

Fluorine and/or boron oxide may be added to the silica tube 52 to control collapse and tapering by adjusting the softening temperature. Doped silica tube material that is relatively soft as compared to undoped silica may reduce distortion to the core regions of the composite core optical fiber 12 during the tapering process. This reduced distortion may ensure good matching between mode field shapes when the narrow end 20 of tapered assembly 14 is spliced to the multicore optical fiber 24. Silica tubes 52 having a lower softening temperature may deform more readily around the composite core optical fibers 12 to fill in interstitial voids.

The tolerance for core spacing in the tapered assembly end face 30 may be relatively tight due to the need for good alignment with the individual cores 39 of multicore optical fiber 24. For example, an optical signal transmitted across a fusion spliced pair of cores where one core has 8.5 $\mu$m mode field diameter and the other core has a 9.5 $\mu$m mode field diameter may experience an insertion loss of 0.0536 dB at an operating wavelength of 1310 nm. However, if these same cores are laterally misaligned by 1.0 $\mu$m, the optical signal may experience an attenuation of 0.2674 dB at 1310 nm, which is an increase in insertion loss of 0.2138 dB.

To minimize variation in lateral offsets, the internal diameter $d_{ID}$ of the silica tube 52 may be selected to provide a tolerance that is sufficiently tight to control the spacing of the core regions 37 at the narrow end 20 of tapered assembly 14. It has been determined that an internal diameter of between 303 and 322 $\mu$m ($303 \leq d_{ID} \leq 322 \mu$m) results in satisfactory core alignment for a 2×2 arrangement of four composite core optical fibers 12 each having a diameter of 125 $\mu$m. However, keeping the internal diameter $d_{ID}$ close to the low end of this range (e.g., $303 \leq d_{ID} \leq 315 \mu$m) may result in less variation in the spacing $d_1$, $d_2$ of the composite cores 40 of tapered assembly end face 30. An internal diameter $d_{ID}$ of 303 to 315 $\mu$m may allow for easy insertion of four composite core optical fibers 12 into the silica tube 52 while still maintaining good core spacing in the tapered assembly 14.

Fig. 10 depicts a portion of a composite core optical fiber 12 that has been preprocessed, e.g., by stripping a protective coating 54 (e.g., one or more urethane acrylate coatings) off the composite core optical fiber 12 and heating the stripped end thereof to form a tip 56. This process may result in the composite core optical fibers 12 having a rounded and/or tapered tip 56 (e.g., by using ball termination process) for improved insertion into the silica tube 52. Forming rounded/tapered tips 56 at the end of each composite core optical fiber 12 may facilitate threading the composite core optical fibers 12 into the silica tube 52 (manually or via automation) when tolerances are tight. Twist may be also minimized by leaving sufficient distance between the end of the silica tube 52 and the edge 58 of the stripped protective coatings 54 of composite core optical fiber 12. Keeping twist of the stuffed composite core optical fibers 12 to a minimum may also help control spacing variance.

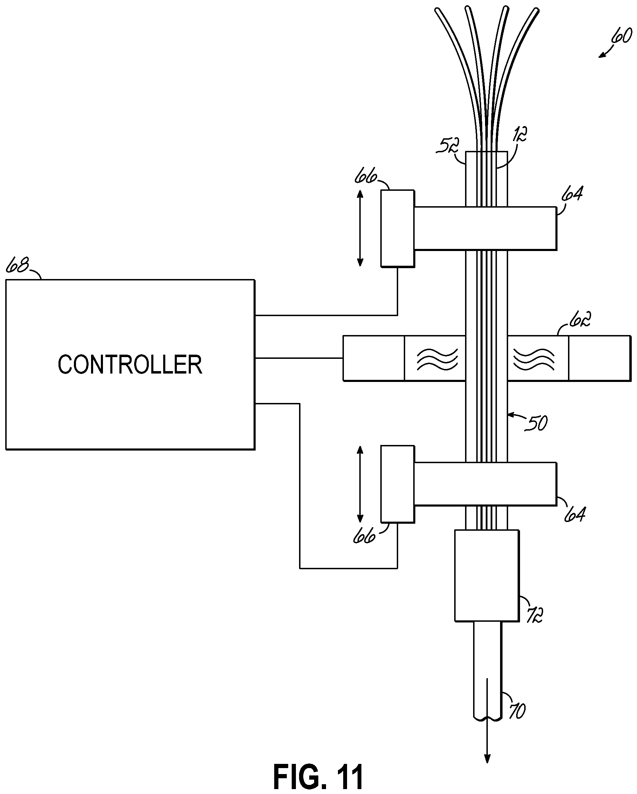

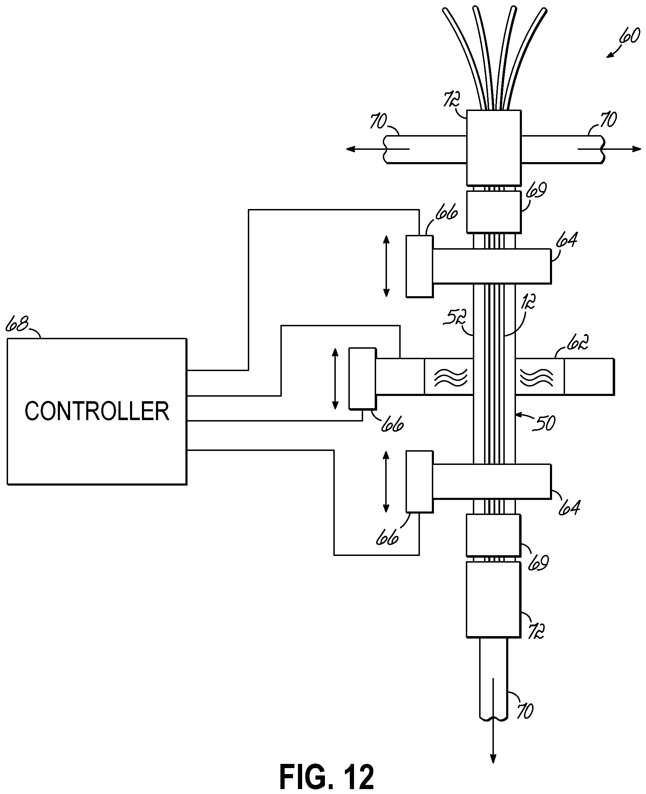

Figs. 11 and 12 depict exemplary taper stations 60 that may be used to form the tapered assembly 14 of fan-in/fan-out device 10. Each of the taper stations 60 includes a heater 62 (e.g., an electric or burner heater) configured to heat the pre-taper assembly 50, upper and lower chucks 64 (e.g., vacuum chucks) each configured to hold one end of the pre-taper assembly 50, one or more stages 66 each operatively coupled to a respective chuck 64 and/or the heater 62, and a controller 68 in communication with one or more of the heater 62 and the stages 66. The controller 68 may include one or more processors, a memory including program code, and an input/output interface. The input/output interface may provide a machine interface that operatively couples the controller 68 to other devices and systems, such as heater 62 and/or stages 66. When executed by the processor, the program code may cause the controller 68 to communicate with the other components of the taper station 60 via the I/O interface to perform a tapering process. The taper station 60 of Fig. 12 further includes mechanical clamps 69 configured to hold the pre-taper assembly 50.

In operation, one or both ends of the pre-taper assembly 50 may be operatively coupled to a vacuum line 70 by a vacuum seal 72. Vacuum may be applied to the pre-taper assembly 50 to assist with insertion of the composite core optical fibers 12 and to help purge any debris from inside the silica tube 52 following insertion of the composite core optical fibers 12. Vacuum may also be applied to the pre-taper assembly 50 during the tapering process to aid the collapse of the silica tube 52 around the composite core optical fibers 12. A vacuum-assisted collapse of the silica tube 52 may help eliminate voids and/or through airlines from the finished tapered assembly 14. One or more of the vacuum seals 72 (e.g., the upper vacuum seal 72 of Fig. 12) may include a two-part seal that seals to the silica tube 52 without disturbing the ends of the composite core optical fibers 12 protruding therefrom.

The cladding 44 of composite core optical fibers 12 may have a diameter suitable for fusion splicing to a standard single core optical fiber 26, e.g., a diameter of 125 $\mu$m. The protective coatings 54 may be removed from the portion of each composite core optical fiber 12 that is to be inserted into the silica tube 52 prior to insertion. The protective coatings 54 may be removed in automated fashion, e.g., using hot nitrogen and/or laser/mechanical stripping. The exposed composite core optical fibers 12 may each be cleaned and a small amount of alcohol provided to the silica tube 52 to lubricate the composite core optical fibers 12 while they are being inserted. An alcohol feed may act as both a lubricant and to flush any unwanted particles from the silica tube 52. The stripped composite core optical fibers 12 may have a sufficient length so that the composite core optical fibers 12 project from the other end of the silica tube 52 when they are fully inserted. This may allow tension to be applied directly to the composite core optical fibers 12 during the tapering process.

The pre-taper assembly 50 may be placed in the taper station 60 so that a midportion thereof is proximate to the heater 62, and each end of the pre-taper assembly 50 coupled to a respective chuck 64. The vacuum line 70 may be coupled to one or more ends of the silica tube 52 by one or more vacuum seals 72 and a vacuum pulled on the pre-taper assembly 50. In cases where the vacuum is only pulled on one end of the silica tube 52, the end of the silica tube 52 opposite the vacuum seal 72 may be plugged using UV-cured adhesive or other suitable material or device.

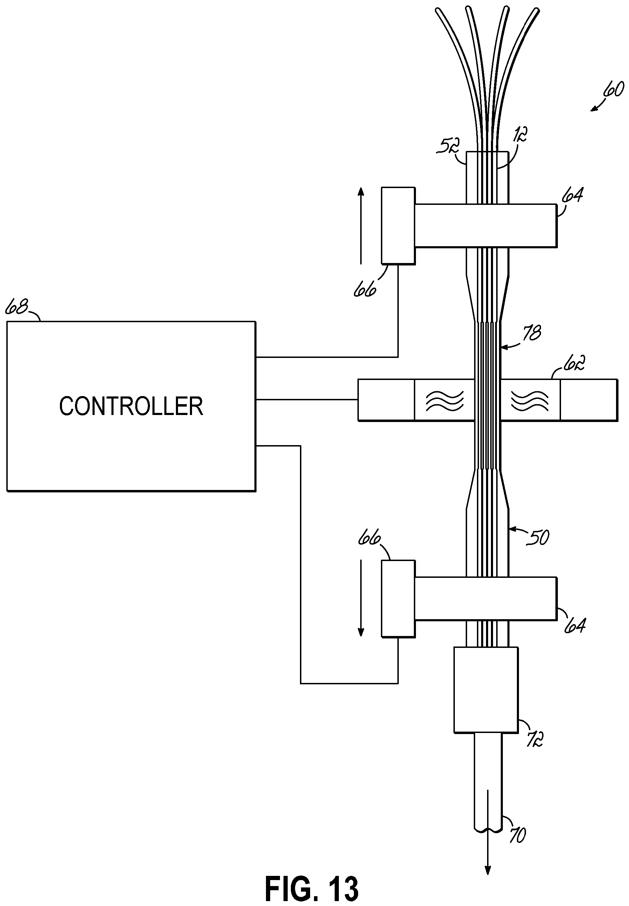

Once a suitable vacuum has been pulled on silica tube 52 (e.g., 1 to 12 mm of mercury (Hg)), the heater 62 may be activated at a suitable power level and period of time to cause the silica tube 52 to reach its softening temperature. The region of the silica tube 52 proximate to the heater 62 may then collapsed around the composite core optical fiber 12. The heater 62 may be further controlled to raise the temperature of the pre-taper assembly 50 by an amount sufficient to cause the composite core optical fibers 12 to reach their softening temperatures. Referring now to Fig. 13, in response to the composite core optical fibers 12 reaching their softening temperature, the controller 68 may cause the stages 66 to pull the pre-taper assembly 50 in opposite directions at a suitable combined rate (e.g., 1.0 cm/sec), thereby causing the heated portion of pre-taper assembly 50 to elongate and form neckdown region 78. For embodiments in which the heater 62 is operatively coupled to a stage 66, the controller 68 may also move the heater 62 while the neckdown region 78 is being formed.

In an embodiment of the fan-in/fan-out device 10, a curable adhesive, such as an epoxy-based UV curable adhesive, may be applied to end of the silica tube 52 into which the composite core optical fibers 12 were inserted and a vacuum applied to the opposite end of the silica tube 52 prior to tapering. The vacuum may cause the epoxy to be drawn into the silica tube 52 to a desired depth. UV light may then be applied to cure the epoxy. The epoxy may cause loads applied to the composite core optical fiber 12 to be transferred to and/or shared with the silica tube 52, thereby improving reliability. The silica tube 52 may then be collapsed and tapered while still under vacuum.

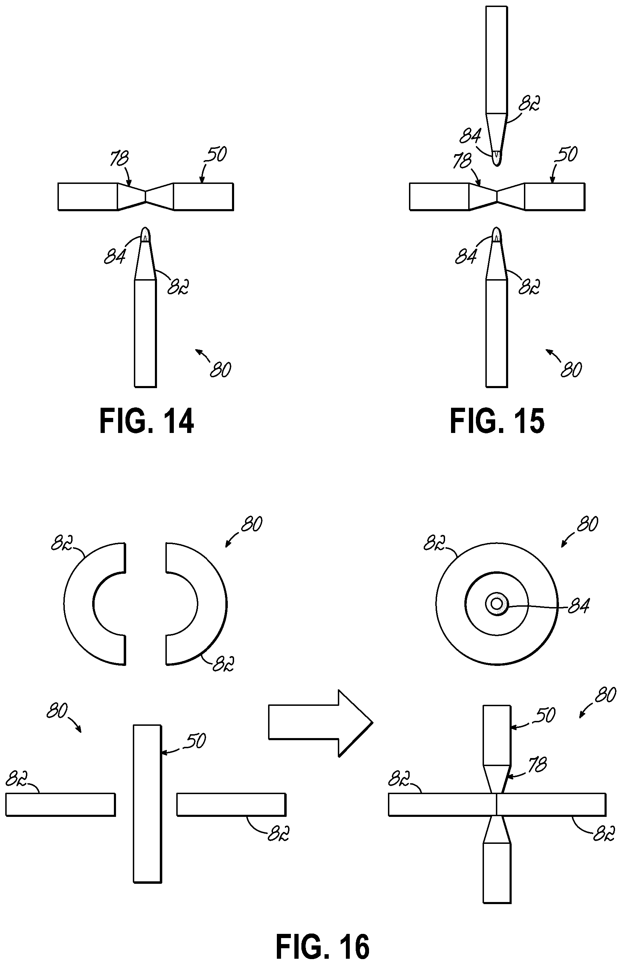

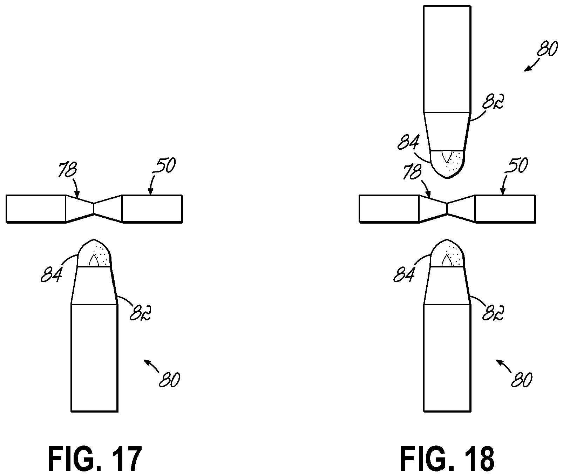

Any suitable type of heater 62 may be used to heat the pre-taper assembly 50. By way of example, a common type of heater 62 includes one or more burners. Burners come in a variety of configurations, some of which are depicted by Figs. 14-18. The burner 80 of Fig. 14 includes a torch 82 with a narrow/focused flame 84. The burner 80 of Fig. 15 includes two opposing torches 82 each having a narrow/focused flame 84. Fig. 16 depicts a burner 80 having a split ring torch 82. The split ring torch 82 can be separated to allow insertion/removal of the pre-taper assembly 50, and closed to encircle the pre-taper assembly 50. The burner 80 depicted by Fig. 17 includes a torch 82 with a broad flame 84. Fig. 18 depicts a burner 80 that includes two torches 82 each having a broad flame 84.

Cleaving processes typically provide better quality end face surfaces if the region being cleaved has a monolithic structure that lacks voids. Voids in the tapered assembly 14 located at the cleaving point may cause a fracture front propagating through the waist of neckdown region 78 to separate and propagate around the void. This may increase the amount of hackle near the composite cores 40 of composite core optical fiber 12 as the separate fracture fronts collide.

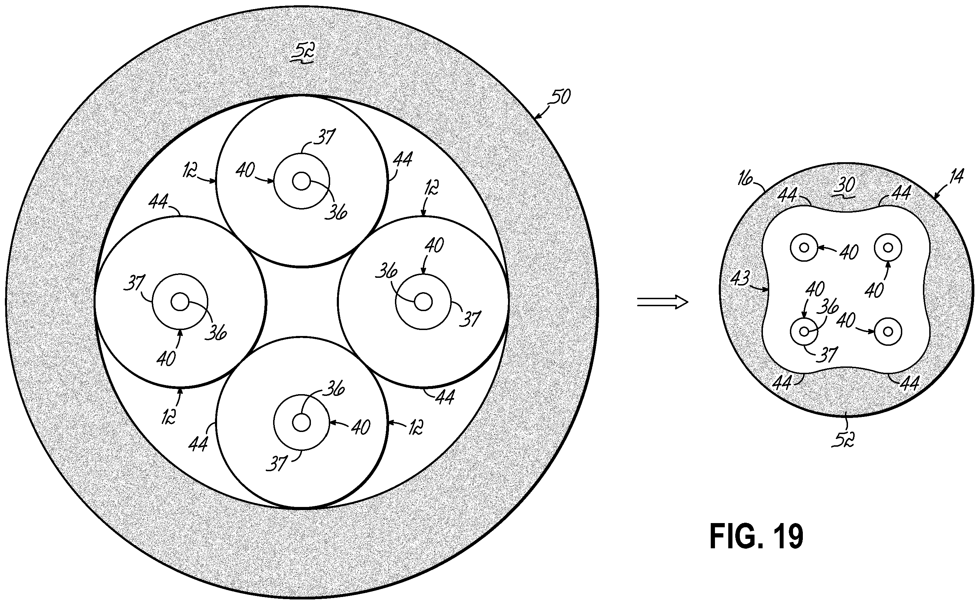

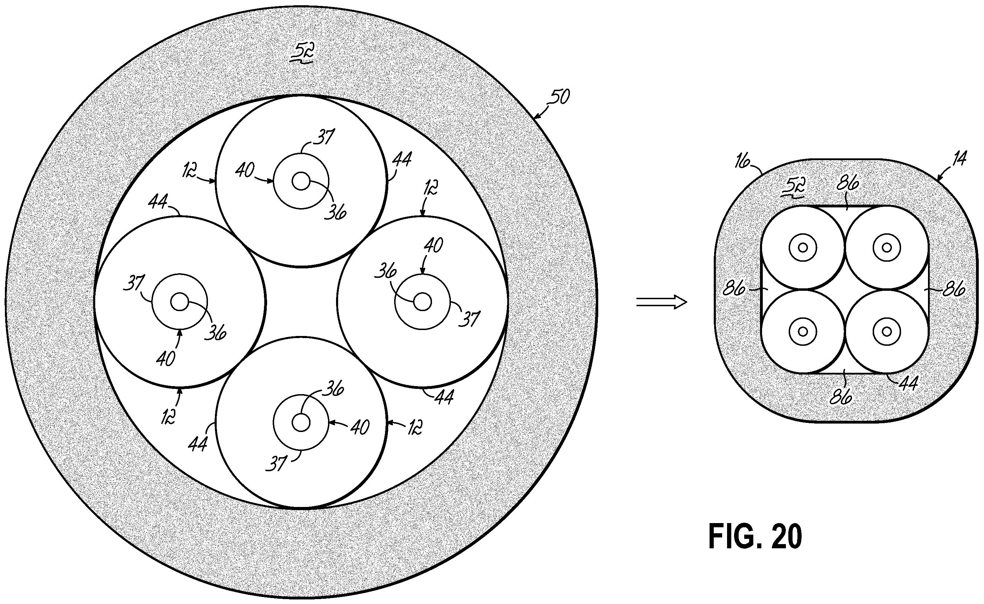

Figs. 19 and 20 depict cross-sectional views of the pre-taper assembly 50 (before the tapering process) and the tapered assembly 14 (after the tapering process). Fig. 19 depicts the results of a well-controlled collapse of the silica tube 52 that has produced a tapered assembly 14 free of voids. Fig. 20 depicts a poorly-controlled collapse that has produced a tapered assembly 14 having multiple voids in the form of airlines 86. Voids between the composite core optical fibers 12 and/or the inner wall of silica tube 52 may be avoided with a properly controlled collapse of the silica tube 52. A properly controlled collapse of the silica tube 52 may also be more likely to produce a predictable spacing of the composite cores 40. Tapered assemblies 14 without voids may be more suitable for fusion splicing to the multicore optical fiber 24 than a tapered assembly 14 with voids.

The internal diameter of the silica tube 52 may be selected to promote a precise and repeatable collapse of the silica tube 52 and tapering of the pre-taper assembly 50. Having an internal diameter that provides a tight fit to the fiber bundle may result in a generally square 2×2 formation of single core optical fibers such that a nearly equidistant square formation of four core regions occurs in the taper. Oversized silica tubes 52 may allow an unpredictable and imprecise formation of the cores in the tapered assembly 14. This can lead to excessive optical signal attenuation due to misalignment of the cores at the tapered assembly end face to multicore optical fiber splice.

In the embodiment depicted by Fig. 19, the four cladding regions 44 of composite core optical fiber 12 have collapse into a fused cladding region 43 having a squarish/clover leaf type structure. The degree to which the composite core optical fibers 12 coalesce, or "coalescence factor" $CF$, may need to be taken into consideration in the design of the tapering process. For example, if the composite core optical fibers 12 each have a diameter $d_{fiber}$ = 125 μm, and the core spacing of the multicore optical fiber 24 is $d_s$ = 40 μm center to center, the taper ratio $R_{taper}$ required to reduce the spacing of a 2×2 arrangement of the composite core optical fiber 12 would be $R_{taper}$ = $d_{fiber}/d_s$ = 125/40 = 3.125 without coalescence. However, due to coalescence of the cladding regions 44, the actual target taper ratio that produces the desired 40 μm core to core spacing may be less, e.g., $R_{taper}$ = 2.920. Thus, in this example, there is a coalescence factor of about:

$$CF = \left(1 - \frac{2.920}{3.125}\right) \times 100\% = 6.56\% \quad Eqn.\,6$$

In practice, there is typically a coalescence factor $CF$ of about 5-8% that should be accounted for when defining the tapering process, e.g., by reducing the taper ratio $R_{taper}$ by the coalescence factor $CF$ as follows:

$$R_{taper} = \frac{d_{fiber}}{d_s}(1 - CF) \quad Eqn.\,7$$

The specific degree of coalescence is dependent on multiple factors, such as level of vacuum, composition of the silica tube 52 and composite core optical fibers 12, the amount of heat and the length of time the heat is applied, the dimensions of the components involved, and the draw rate. The coalescence factor $CF$ may be determined empirically by adjusting these and any other relevant factors and measuring the resulting dimensions of the tapered assembly 14.

The tapering process may result in a long taper waist or a short taper waist as long as the process does not cause non-adiabatic losses, e.g., by creating a taper that is too steep. A longer taper waist may facilitate cleaving the neckdown region 78 at a point having the desired taper ratio $R_{taper}$ due to longer tapers tending to have a longer section with a constant diameter. If the diameter of the region being cleaved is roughly that of the multicore optical fiber 24, and the pitch of the cores 37 of the region is similar to that of the multicore optical fiber 24, the location of the cleaving point may be relatively forgiving.

The tapering process may involve moving the stages 66 in opposite directions or in the same direction with slightly different speeds. The tapering process may involve the flame brush method, where the heater 62 moves a fixed amount or a distance that gradually increases in either direction about the center of the silica tube 52. The tapering process may involve reducing the gas flow as the silica tube 52 is progressively reduced in diameter. For taper stations 60 having a heater 62 with a ring burner, as the diameter of the neckdown region progressively shrinks, the flame may be moved away from the silica tube 52 as a way to improve reproducibility. In any case, it may be advantageous to employ a tapering process that produces a taper that is long and gentle enough to avoid the occurrence of non-adiabatic taper loss.

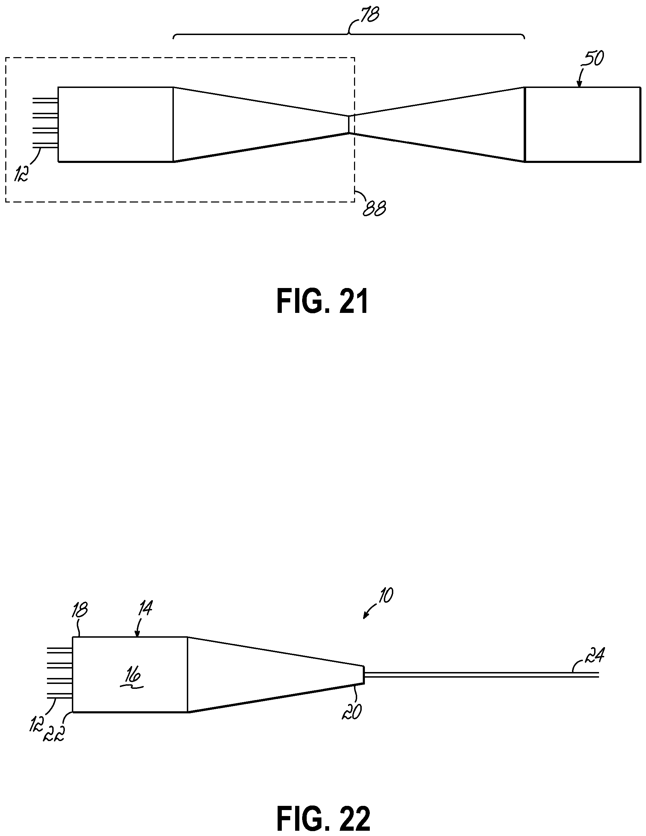

Referring now to Fig. 21, after the now tapered pre-tapered assembly 50 has cooled sufficiently, it may be removed from the taper station 60. A suitable adhesive (e.g., a UV curable adhesive) may be applied to seal the upper end, and the neckdown region 78 cleaved to finish fabrication of the fan-in/fan-out device 10. The neckdown region 78 may be cleaved at a desired cleaving location 88 using a mechanical or laser assisted process, e.g., laser assisted (Bessel beam) or mechanical cleaving. Cleave angles less than 0.5 degrees may be preferred for optimizing the splice loss between the tapered assembly end face 30 and the multicore optical fiber 24.

Fig. 22 depicts the cleaved surface of the neckdown region 78 spliced to the multicore optical fiber 24. Splicing may be performed using an arc, laser, or electric resistance heater, for example. Splicing may involve power peaking to minimize insertion loss due to misalignment of mode fields as well as lateral/axial offsets. Utilizing active power peaking during alignment may allow attaching symmetrically placed core(s) as well as offset core(s) (e.g., cores that are non-symmetric about the center, or cores that are offset from the center for identification) of the multicore optical fiber 24 to the tapered assembly 14, which may help provide a low loss splice.

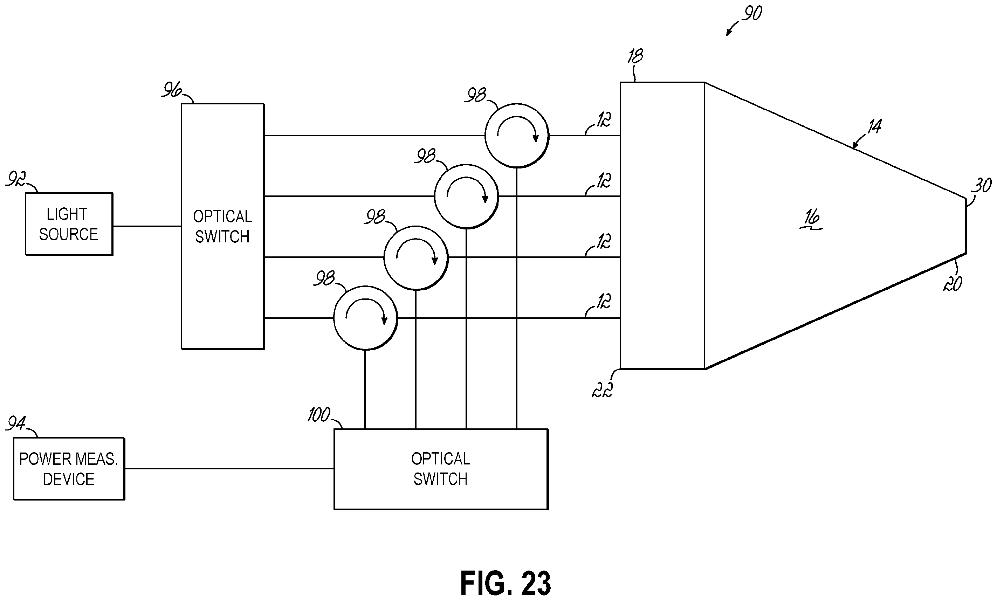

Fig. 23 depicts an exemplary loss measurement system 90 for measuring the quality of the fan-in/fan-out device 10. The loss measurement system 90 may be used to verify the collapse, tapering, and cleaving processes were successful before splicing the device to the multicore optical fiber 24. The loss measurement system 90 includes a light source 92, a power measurement device 94, an input optical switch 96 that selectively couples the light source 92 to an input port of a selected optical circulator 98, and an output optical switch 100 that selectively couples the power measurement device 94 to an output port of the selected optical circulator 98. During testing, light generated by the light source 92 may be selectively coupled into each composite core optical fiber 12 by the input optical switch 96. This light may propagate through the composite core optical fiber 12 until it reaches the tapered assembly end face 30, where a portion of the light is reflected back toward the circulator 98. The circulator 98 optically couples the reflected light to the output optical switch 100, which in turn optically couples the reflected light to the power measurement device 94. The quality of the taper can then be determined based on the power of the back reflection as compared to the output of the light source. The loss measurement system 90 may thereby evaluate the fan-in/fan-out device 10 based on the back reflection taper loss measurement. Devices with acceptable loss (e.g., loss measurements below a predetermined value) and cleave angle may be moved forward for splicing, and those with unacceptable loss may be scrapped.

If the pitch of the cores 40 at the narrow end 20 of tapered assembly 14 do not exactly match those of the multicore optical fiber 24, a "loss sharing" alignment may be used to lower insertion loss. By way of example, a multicore optical fiber 24 may have core-to-core spacing of 40 μm in a 2×2 arrangement. The cores 39 of the multicore optical fiber 24 may then have equal length diagonals measuring 56.6 μm. If the tapered assembly end face 30 has core-to-core spacings of 38.4, 40.8, 38.9 and 40.0 μm, the two diagonals may have a length of around 56 μm and the pattern may not be perfectly square. These values may be typical for a tapered assembly 14 having core-to-core spacings with a standard deviation of about 1.0 μm.

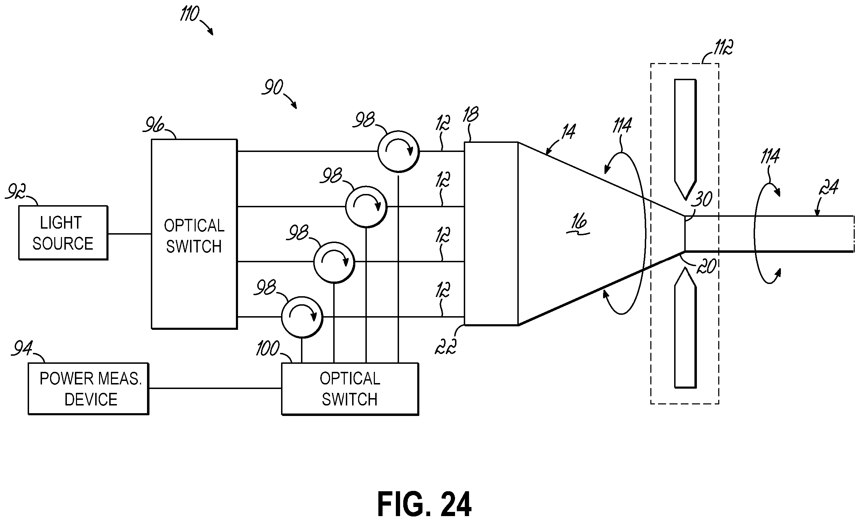

Fig. 24 depicts an exemplary splicing system 110 that may be used to optimize splice performance in situations such as described above in which the cores are not perfectly aligned. The splicing system 110 includes the loss measurement system 90 and a fusion splicer 112. After a rough alignment and before the tapered assembly 14 is fused to the multicore optical fiber 24, one or more of the tapered assembly 14 and multicore optical fiber 24 may be rotated relative to each other (as depicted by double arrowed lines 114) while the return loss is measured by the loss measurement system 90. The relative orientations of the tapered assembly 14 and multicore optical fiber 24 may then be selected as an orientation in which the insertion loss on each channel is lower than a target value, e.g., less than 0.50 dB. Table I below provides exemplary values that were obtained using the above described optimization technique.

| TABLE 1 - EXEMPLARY INSERTION LOSSES | | |
|---|---|---|
| Wavelength | 1310 nm | 1550 nm |
| Loss Channel - 1 | 0.25 dB | 0.22 dB |
| Loss Channel - 2 | 0.18 dB | 0.12 dB |
| Loss Channel - 3 | 0.38 dB | 0.34 dB |
| Loss Channel - 4 | 0.51 dB | 0.42 dB |
| Mean insertion loss | 0.33 dB | 0.28 dB |

In the above example, the mean insertion loss across the four channels is 0.33 dB at 1310 nm and 0.28 dB at 1550 nm. Advantageously, balancing losses across the channels by rotating the optical fibers to find an optimum splicing angle may enables fabrication of fan-in/fan-out devices 10 having lower total loss per channel than those known in the prior art.

Three-index composite core optical fibers may be more sensitive to mode field mismatch than standard two-index single mode optical fibers. For example, a two-index single mode optical fiber with a mode field diameter of 9.6 μm may be coupled to another two-index single mode optical fiber with a mode field diameter of 8.6 μm. This combination of optical fibers would normally experience a signal loss of approximately 0.05 dB across the splice. Thus, a 1 μm misalignment of a splice between a pair of two-index single mode optical fibers has what would typically be considered an acceptable amount of signal loss. In contrast, with a three-index optical fiber structure, the mismatch loss will be guided by the $\Delta_2/\Delta_3$ index step (see Figs 4 and 5), which can cause an interferometric based loss that may be double the loss of the two-index single mode optical fiber.

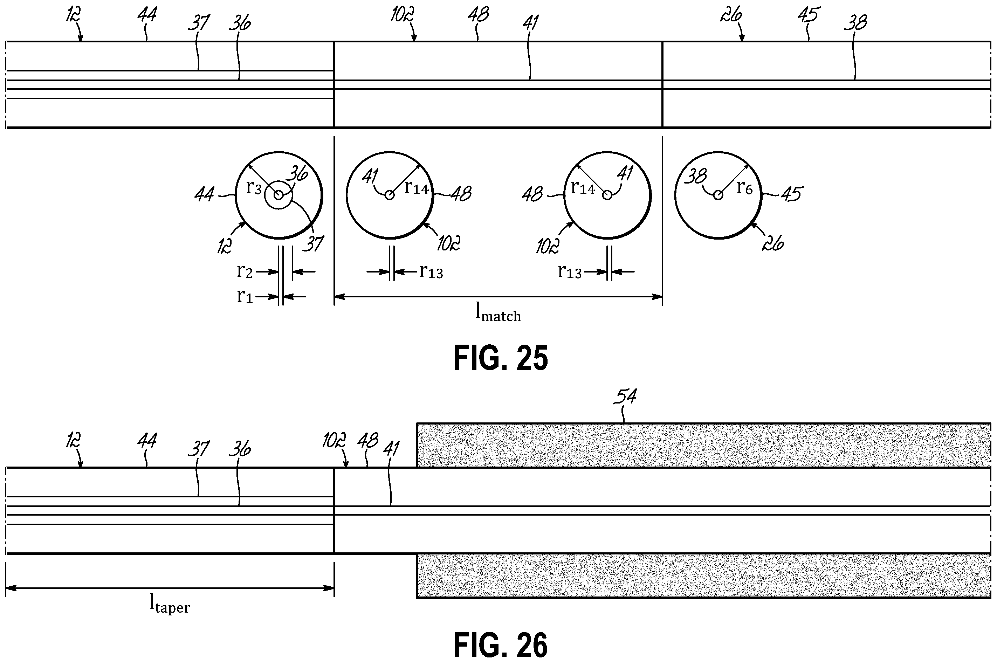

Fig. 25 depicts a matching optical fiber 102 that may be placed between each (two-index) single core optical fiber 26 and the (three-index) composite core optical fiber 12 to which the single core optical fiber 26 is being operationally coupled to reduce alignment sensitivity of the composite core optical fiber 12. The matching optical fiber 102 includes a core 41 having a radius $r_{13}$ and an index of refraction $n_1$, and a cladding 48 having a radius $r_{14}$ and index of refraction $n_2$. Thus, the index of refraction of the matching optical fiber core 41 matches that of the inner core 36 of composite core optical fiber 12, and the index of refraction of the matching optical fiber cladding 48 matches the index of refraction of the outer core 37 of composite core optical fiber 12.

As shown by Fig. 26, prior to the tapering process, a short piece of the composite core optical fiber 12 (e.g., $l_{taper}$ =

25 mm) may be fusion spliced to a length of a matching optical fiber 102 (e.g., $l_{match}$) from which the protective coating 54 has been stripped. A number of these matching optical fiber/composite core optical fiber splices may be inserted into the silica tube 52 to form the pre-taper assembly 50. The composite core optical fiber 12 may be spliced to the matching optical fiber 102 using a conventional fusion splicer.

The radius $r_{13}$ of the core 41 of matching optical fiber 102 may be selected so that the mode field diameter of matching optical fiber 102 matches the mode field diameter of composite core optical fiber 12. The radius $r_{14}$ of the cladding 48 of matching optical fiber 102 may be selected so that the outer diameter of matching optical fiber 102 matches the outer diameter of the composite core optical fiber 12, e.g., so that $r_3 = r_{14}$. The mode field diameter of the matching optical fiber 102 may be sufficiently matched to that of the composite core optical fiber 12 so that there is little or no loss (e.g., signal loss < 0.05 dB) between the composite core optical fiber 12 and the matching optical fiber 102. The two-index matching optical fiber 102 may enable the fan-in/fan-out device 10 to be spliced to a wide range of single core optical fibers 26 (e.g., single core optical fibers 26 having a wide range of mode field diameters) without exciting higher order modes that result in high interferometric induced losses.

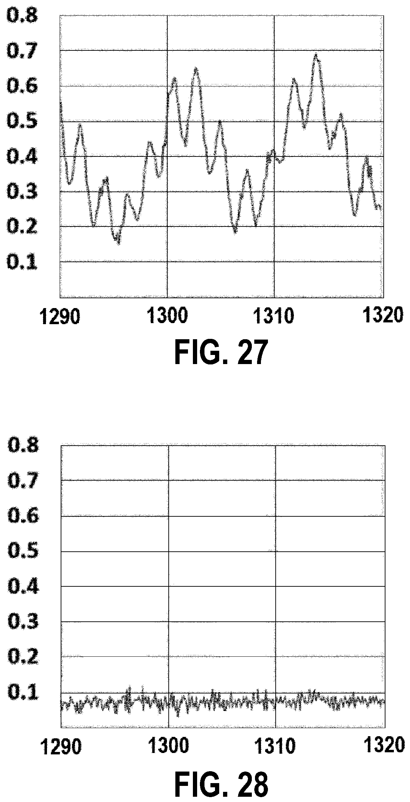

By way of example, Fig. 27 depicts a graph showing a measured signal loss in dB versus wavelength in nanometers for an exemplary composite core optical fiber 12 spliced directly to an exemplary single-core optical fiber 26 without a matching optical fiber 102. The exemplary three-index optical fiber was configured to have a mode field diameter of 9.0 $\mu$m and numerical aperture (NA) of 0.098. The two-index single core optical fiber 26 was configured to have a mode field diameter of 9.4 $\mu$m and numerical aperture of 0.092. As can be seen from the graph, there is a considerable amount of splice loss.

Fig. 28 depicts a graph showing measured signal loss in dB versus wavelength in nanometers when the above described composite core optical fiber 12 is operatively coupled to the single core optical fiber 26 by the matching optical fiber 102. As can be seen, the matching optical fiber 102 reduces the extent of higher order mode excitation, which in turn reduces splice loss. The composite core optical fiber 12 used in the above experiments was about one meter long.

After fabrication, the single core optical fibers 26 may be connectorized. For example, LC, SC, FC or other types of connectors may be installed on the free end of each single core optical fiber 26. The fan-in/fan-out device 10 may then be packaged, e.g., in a glass tube or other container configured to ruggedize the fan-in/fan-out device 10 and operate as a taper splice protector. The packaged fan-in/fan-out device 10 may then be placed in a section of stainless steel tubing and strain relief boots attached or formed on each end of the stainless steel tube.

A plurality of different experimental optical fibers suitable for using as the composite core optical fiber 12 have been modeled using different compound core radius ratios $R_{core} = r_1/r_2 = r_6/r_7$ and different profile designs (See Figs. 4 and 5) to determine their suitability. The design parameters for these modeled composite core optical fibers 12 are shown in Tables II and III below.

| TABLE II - PROFILE DESIGN PARAMETERS | | | | | | | | |
|---|---|---|---|---|---|---|---|---|
| DESIGN | 1A | 1B | 1C | 1D | 2A | 2B | 2C | 2D |
| $\Delta_1$ (%) | 0.34 | 0.34 | 0.34 | 0.34 | 0.34 | 0.34 | 0.34 | 0.34 |
| $\Delta_2$ (%) | 0 | 0 | 0 | 0 | 0 | 0 | 0 | 0 |
| $\Delta_3$ (%) | -0.15 | -0.15 | -0.15 | -0.15 | -0.20 | -0.20 | -0.20 | -0.2 |
| $R_{core}$ | 0.413 | 0.330 | 0.275 | 0.236 | 0.413 | 0.330 | 0.275 | 0.236 |

| TABLE III - PROFILE DESIGN PARAMETERS | | | | | | | | |
|---|---|---|---|---|---|---|---|---|
| DESIGN | 3A | 3B | 3C | 3D | 4A | 4B | 4C | 4D |
| $\Delta_1$ (%) | 0.34 | 0.34 | 0.34 | 0.34 | 0.34 | 0.34 | 0.34 | 0.34 |
| $\Delta_2$ (%) | 0 | 0 | 0 | 0 | 0 | 0 | 0 | 0 |
| $\Delta_3$ (%) | -0.25 | -0.25 | -0.25 | -0.25 | -0.30 | -0.30 | -0.30 | -0.30 |
| $R_{core}$ | 0.413 | 0.330 | 0.275 | 0.236 | 0.413 | 0.330 | 0.275 | 0.236 |

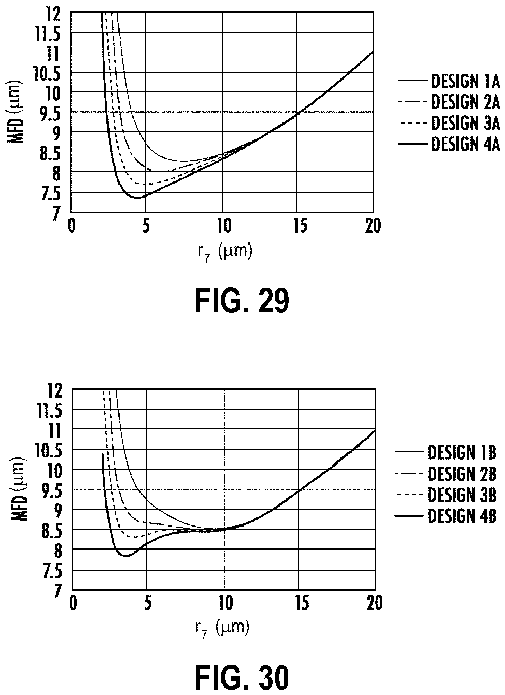

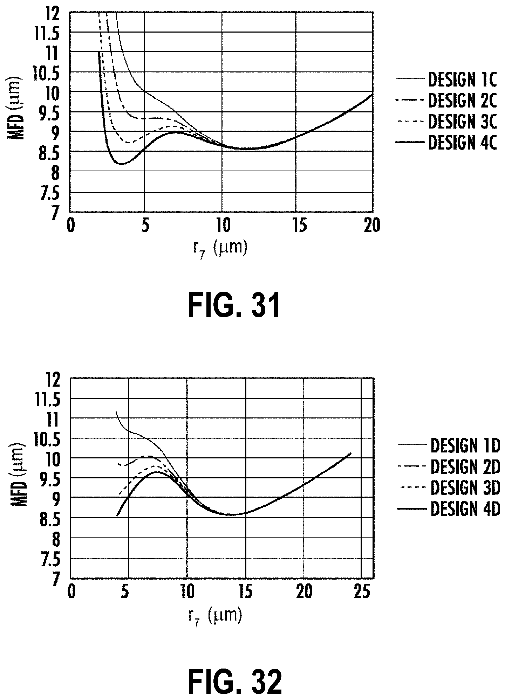

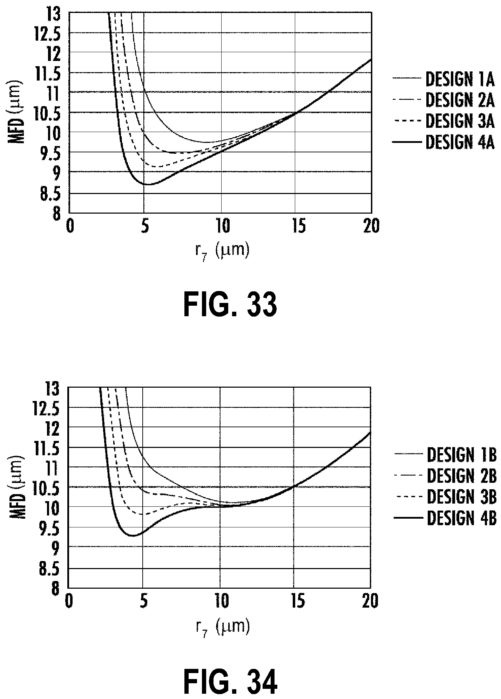

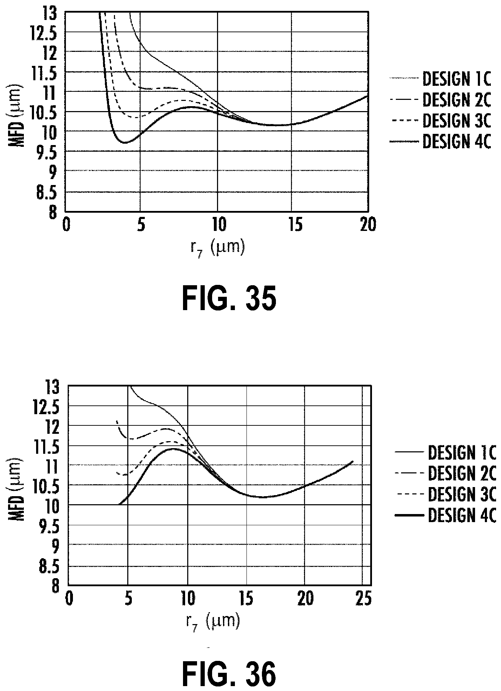

Figs. 29-36 depict the simulated mode field diameter versus core radius $r_7$ (which varies with taper ratio) for different core designs. Figs. 29-32 are for an optical signal with a wavelength of 1310 nm, and Figs. 33-36 are for an optical signal with a wavelength of 1550 nm. As can be seen from the data in Tables II and III, in each simulation the outer core 37 was modeled as pure silica glass with a relative refractive index $\Delta_2 = 0$ and the inner core 36 was modeled as having positive relative refractive index $\Delta_1 > 0$. The refractive index of silica glass can be increased by adding an up-dopant, such as Germanium (Ge), Titanium (Ti), Aluminum (Al), Phosphorus (P) or Chlorine (Cl). In each simulation, the cladding 44 was modeled as having a negative relative refractive index $\Delta_3 < 0$. The refractive index of silica glass can be decreased by adding a down-dopant, such as Fluorine (F) or Boron (B). Similar relative refractive indexes could also be obtained by choosing the cladding to be pure silica with $\Delta_2 = 0$ and using an appropriate amount and type of up-doping to increase the refractive indexes of the inner core 36 and outer core 37. In this embodiment, the relative refractive indexes of both the inner core 36 and outer core 37 would be shifted higher. As a result, the relative differences in the refractive index delta between the inner core 36, the outer core 37, and the cladding 44 would be about the same.

As can be seen from the plots of Figs. 29-36, it is possible to choose a core radius before tapering and a core radius after tapering so that the composite core optical fibers 12 have mode field diameters that match the single core optical fibers 26, and the composite cores 40 at the narrow end 20 of tapered assembly 14 have mode field diameters that match the mode field diameters of the multicore optical fiber 24. To obtain sufficiently low insertion losses across the fan-in/fan-out device 10, the mismatch between mode field diameters at each end of the fan-in/fan-out device 10 should be less than 1 $\mu$m, preferably less than 0.5 $\mu$m, and more preferably less than 0.25 $\mu$m. A typical range of mode field diameters may be between 8 $\mu$m and 11 $\mu$m at 1310 nm and between 9 $\mu$m and 12 $\mu$m at 1550 nm. A taper ratio of $2 \leq R_{taper} \leq 4$ can be utilized while still matching the mode field diameters at each end of the fan-in/fan-out device 10.

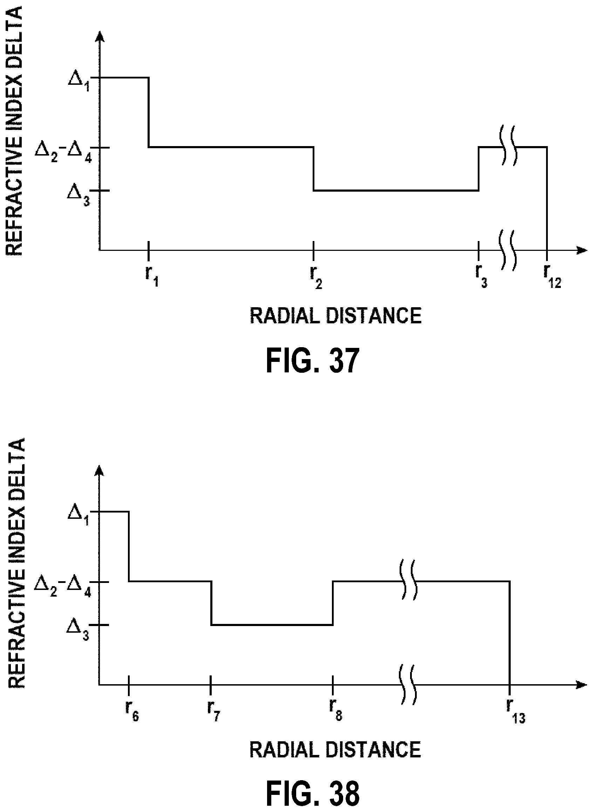

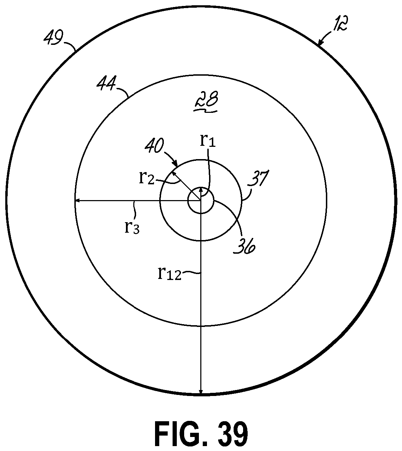

Fig. 37 illustrates a refractive index delta profile prior to tapering that characterizes exemplary composite core optical fibers 12 in accordance with an alternative embodiment of the fan-in/fan-out device 10. Fig. 39 depicts an end-view of the composite core optical fiber 12, which includes the inner core 36, outer core 37, cladding 44 (which is an "inner cladding 44" in this embodiment), and an outer cladding 49. The inner core, outer core, and (inner) cladding refractive index deltas of the profile depicted by Fig. 37 is similar to that of the profile depicted by Fig. 4. However, the profile depicted by Fig. 37 includes the additional outer cladding 49, which has a refractive index delta $\Delta_4$ in the region extending from radius $r_3$ out to radius $r_{12}$. Beyond radius $r_{12}$, the refractive index delta is shown as negative owing to the refractive index of air $n_{air}$ being less than the reference refractive index $n_0$. The refractive index deltas of the depicted index profile are such that that $\Delta_1 > \Delta_2 > \Delta_3$ and $\Delta_2 = \Delta_4$. However, it should be understood that the value of $\Delta_4$ may be selected so that it not equal to any of the other refractive index deltas.

Fig. 38 illustrates the index profile of the composite core optical fiber 12 after tapering. As can be seen, the tapering process has reduced each of the radiuses by the taper ratio as follows:

$$\frac{r_1}{r_6} = \frac{r_2}{r_7} = \frac{r_3}{r_8} = \frac{r_{12}}{r_{13}} = R_{taper} \quad Eqn.\,8$$

The profile design depicted by Figs. 4 and 5 may allow higher order modes to propagate through a short taper section. These higher order modes may interact such that they cause multipath interference, which can cause insertion losses that fluctuate with wavelength (undesirable for fanout applications). Adding the outer cladding 49 with a different refractive index than the inner cladding 44 reduces this multipath interference. Because refractive index delta $\Delta_4$ is higher than refractive index delta $\Delta_3$, the outer cladding may strip higher order modes in the composite core region when the fiber is tapered down. Refractive index delta $\Delta_4$ may be in the range of -0.2 to 0%, and more preferably in between -0.1 to 0%. The ratio of radiuses $r_4/r_3$ may be in the range of 3 to 8, more preferably between 4 to 6. The above double cladding design may reduce multipath interference to less than 0.1 dB.

The various features discussed herein may be used alone or in any combination within and between the various embodiments. Also, additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

Additionally, values provided herein are not intended to limit the scope of the invention to these specific examples unless such values are explicitly claimed. The values may be claimed in terms of ranges including any two values disclosed (e.g., in tables II or III or elsewhere). Furthermore, the term "about" may precede any of the values or ranges to indicate that the values can vary within tolerances that are usual and customary in the field of this disclosure. Thus, the term "about" is intended to encompass slight variations (e.g., $\pm 10\%$) from the specified value or range, as would be understood by a person of ordinary skill in the field of this disclosure.

## Claims

1. A fan-in/fan-out device for a multicore optical fiber, comprising:

a tapered assembly including a wide end and a narrow end, the narrow end having a tapered assembly end face;

and
a plurality of composite core optical fibers extending from the wide end of the tapered assembly, each composite core optical fiber including:

a composite core having a first core with a first radius and a first index of refraction and a second core surrounding the first core with a second radius and a second index of refraction different from the first index of refraction, and
a first cladding surrounding the composite core and having a third radius and a third index of refraction different from both the first index of refraction and the second index of refraction,

wherein the tapered assembly end face includes a fused cladding region comprising the first cladding of each of the composite core optical fibers and a plurality of composite cores embedded in the fused cladding region, the plurality of composite cores comprising the composite core of each of the composite core optical fibers, and wherein the plurality of composite cores defines a first core pattern in the tapered assembly end face that matches a second core pattern of the multicore optical fiber.

2. The fan-in/fan-out device of claim 1, wherein the first index of refraction is greater than the second index of refraction, and the second index of refraction is greater than the third index of refraction.

3. The fan-in/fan-out device of claim 1 or 2, wherein the tapered assembly further includes an outer region that surrounds the fused cladding region with a fourth index of refraction equal to or greater than the third index of refraction.

4. The fan-in/fan-out device of any of claims 1-3, wherein the first cladding is an inner cladding, and each of the composite core optical fibers further includes a second cladding surrounding the first cladding and having a fifth index of refraction higher than the third index of refraction.

5. The fan-in/fan-out device of any of claims 1-4, wherein each of the composite core optical fibers includes only one composite core.

6. The fan-in/fan-out device of any of claims 1-5, further comprising:

a plurality of matching optical fibers each operatively coupled to a respective one of the composite core optical fibers, each matching optical fiber including:

a third core having an index of refraction different than the second core and a fourth radius; and
a third cladding having an index of refraction different than the third core,

wherein the fourth radius is selected so that the matching optical fiber has a mode field diameter matching the mode field diameter of the composite core optical fiber.

7. The fan-in/fan-out device of any of claims 1-6, wherein the tapered assembly includes a neckdown region having a taper ratio, each of the composite core optical fibers has an optical fiber end face, the first core of the composite core optical fiber has the first radius at the optical fiber end face and a fifth radius at the tapered assembly end face, a ratio of the first radius to the fifth radius is defined by the taper ratio of the neckdown region, and the taper ratio is between 2 and 4.

8. The fan-in/fan-out device of any of claims 1-7, wherein each of the composite core optical fibers has an outer diameter, the tapered assembly includes a neckdown region having a taper ratio, and the second core pattern has a predetermined spacing, the fan-in/fan-out device further comprising:

the multicore optical fiber operatively coupled to the tapered assembly end face;
wherein the taper ratio of the tapered assembly is equal to a ratio of the outer diameter of the composite core optical fibers and the predetermined spacing reduced by a coalescence factor.

9. A method of fabricating the fan-in/fan-out device of any preceding claim, the method comprising:

inserting a plurality of composite core optical fibers into a silica tube to define a pre-taper assembly having a first end and a second end, each of the composite core optical fibers including a first core with a first radius and a first index of refraction, a second core surrounding the first core with a second radius and a second index of refraction different from the first index of refraction, and a first cladding surrounding the second core with a third radius and a third index of refraction different from the first index of refraction and the second index of refraction;

heating a portion of the pre-taper assembly;

collapsing the silica tube onto the composite core optical fibers;

pulling the first end and the second end of the pre-taper assembly in opposite directions to form a tapered assembly having a neckdown region; and

cleaving the neckdown region of the tapered assembly to form a tapered assembly end face.

10. The method of claim 9, wherein the silica tube has a first softening temperature, the composite core optical fibers have a second softening temperature higher than the first softening temperature, and further comprising:

applying a vacuum to the silica tube; and

heating the silica tube to the first softening temperature so that the silica tube collapses onto the composite core optical fibers.

11. The method of claim 10, further comprising:

heating the portion of the pre-taper assembly to the second softening temperature,

wherein the first end and the second end of the pre-taper assembly are pulled in opposite directions to form the neckdown region of the tapered assembly in response to the portion of the pre-taper assembly reaching the second softening temperature.

12. The method of any of claims 9-11, wherein there are four composite core optical fibers each having a first diameter, and the silica tube has an inner diameter of between 2.424 and 2.576 times the first diameter.

13. The method of any of claims 9-12, further comprising:

for each of the composite core optical fibers, splicing a matching optical fiber to the composite core optical fiber, wherein the matching optical fiber includes a third core having an index of refraction different than the second core and a third cladding having the an index of refraction different than the third core, and the third core has a fourth radius such that a mode field diameter of the matching optical fiber matches the mode field diameter of the composite core optical fiber.

14. The method of any of claims 9-13, wherein each of the composite core optical fibers has an outer diameter equal to twice the third radius, and further comprising:

splicing a multicore optical fiber to the tapered assembly end face, the multicore optical fiber including a plurality of cores having a predetermined spacing,

wherein the first end and the second end of the pre-taper assembly are pulled in opposite directions such that the neckdown region of the tapered assembly has a taper ratio equal to a ratio of the outer diameter of the composite core optical fibers and the predetermined spacing reduced by a coalescence factor, and

wherein the taper ratio is between 2 and 4, and the coalescence factor is between 5 and 8 percent.

15. The method of any of claims 9-14, further comprising:

aligning the tapered assembly end face with a multicore optical fiber;

measuring a return loss while causing relative rotation between the tapered assembly end face and the multicore optical fiber to determine an orientation that produces a loss measurement below a predetermined value; and

splicing the tapered assembly end face and the multicore optical fiber at the orientation.

**FIG. 1**

**FIG. 2A**

**FIG. 2B**

FIG. 3A

FIG. 3B

FIG. 4

FIG. 5

12
44
37
36

50

52

**FIG. 6**

36 37 44
52
12
50

$d_{ID}$

$d_{OD}$

**FIG. 7**

**FIG. 8**

**FIG. 9**

**FIG. 10**

**FIG. 11**

FIG. 12

**FIG. 13**

**FIG. 14**

**FIG. 15**

**FIG. 16**

**FIG. 17**

**FIG. 18**

FIG. 19

FIG. 20

EP 4 571 376 A1

FIG. 21

FIG. 22

**FIG. 23**

EP 4 571 376 A1

**FIG. 24**

EP 4 571 376 A1

r₃ 36
44 r₃ 36
12 37

r₂
r₁

41 r₁₄ 48
102

48 r₁₄ 41
102

38 r₆ 45
26

r₁₃

r₁₃

l_match

**FIG. 25**

54

12 44 37 36 102 48 41

l_taper

**FIG. 26**

**FIG. 27**

**FIG. 28**

**FIG. 29**

**FIG. 30**

**FIG. 31**

**FIG. 32**

**FIG. 33**

**FIG. 34**

FIG. 35

FIG. 36

FIG. 37

FIG. 38

**FIG. 39**

Europäisches
Patentamt

European
Patent Office

Office européen
des brevets

# EUROPEAN SEARCH REPORT

**Application Number**

EP 24 21 4913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 946 014 B2 (ABEDIN KAZI S [US]; TAUNAY THIERRY F [US] ET AL.) 17 April 2018 (2018-04-17) * figures 6A-D * * figure 8A * * column 9, lines 26-27 * * column 12, lines 49-61 * * figure 11 * * figure 15 * * column 12, lines 5-25 * ----- | 1-15 | INV. G02B6/02 |
| A | US 10 073 220 B2 (FUJIKURA LTD [JP]) 11 September 2018 (2018-09-11) ----- | 1-15 | |
| A | US 2014/010508 A1 (MATSUO SHOICHIRO [JP] ET AL) 9 January 2014 (2014-01-09) ----- | 1-15 | |
| A | US 2019/033512 A1 (UEMURA HITOSHI [JP] ET AL) 31 January 2019 (2019-01-31) ----- | 1-15 | |

TECHNICAL FIELDS
SEARCHED (IPC)

G02B

The present search report has been drawn up for all claims

| Place of search | Date of completion of the search | Examiner |
|---|---|---|
| The Hague | 6 May 2025 | Verbandt, Yves |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

**ANNEX TO THE EUROPEAN SEARCH REPORT**
**ON EUROPEAN PATENT APPLICATION NO.**

EP 24 21 4913

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2025

| Patent document cited in search report | | | Publication date | Patent family member(s) | | Publication date |
|---|---|---|---|---|---|---|
| US 9946014 | B2 | | 17-04-2018 | CN | 103827715 A | 28-05-2014 |
| | | | | EP | 2721438 A1 | 23-04-2014 |
| | | | | JP | 2014522997 A | 08-09-2014 |
| | | | | JP | 2016197248 A | 24-11-2016 |
| | | | | US | 2014119694 A1 | 01-05-2014 |
| | | | | WO | 2012177808 A1 | 27-12-2012 |
| US 10073220 | B2 | | 11-09-2018 | CN | 106605160 A | 26-04-2017 |
| | | | | EP | 3179284 A1 | 14-06-2017 |
| | | | | JP | 5908559 B1 | 26-04-2016 |
| | | | | JP | 2016080914 A | 16-05-2016 |
| | | | | US | 2017235055 A1 | 17-08-2017 |
| | | | | WO | 2016059900 A1 | 21-04-2016 |
| US 2014010508 | A1 | | 09-01-2014 | JP | 5990419 B2 | 14-09-2016 |
| | | | | JP | 2014016472 A | 30-01-2014 |
| | | | | US | 2014010508 A1 | 09-01-2014 |
| US 2019033512 | A1 | | 31-01-2019 | CN | 108496100 A | 04-09-2018 |
| | | | | JP | 2017134290 A | 03-08-2017 |
| | | | | US | 2019033512 A1 | 31-01-2019 |
| | | | | WO | 2017130426 A1 | 03-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63603673